# EUROPEAN PATENT APPLICATION

(11) **EP 0 987 488 A1**
(43) Date of publication of application: **22.03.2000**
(21) Application number: 99118322.9
(22) Date of filing: 15.09.1999
(51) Int. Cl.: F21V 8/00, F21V 25/12

(54) **Optical lighting apparatus**

(30) Priority: 16.09.1998 US 154080
(71) Applicant: Litton Systems, Inc., Watertown Connecticut 06795-0500 (US)
(72) Inventor: Bernardini, Allen J., Southbury, Connecticut 96488 (US)
(74) Representative: MÜLLER & HOFFMANN Patentanwälte

(57) **Abstract**

Disclosed is a lighting system (10) in which the source of light (18) is remotely located from a hollow light guide (12). The source of light (18) need not be suspended along with the hollow light guide (12). Instead, the source of light (18) emits light into an optical fiber (16) which can then be focused into the hollow light guide (12) by a light directing element (14). Advantageously, the arrangement according to the present results in a lighter weight overhead installation, allows the hollow light guide (12) to remain cool over its entire length, eliminates any electrical hazard overhead, eliminates RFI and EMI caused by overhead electrical wiring, and provides for easier maintenance from the floor level. The lighting system (10) provides shock vibration resistance for the light source (18).

## Description

### Field of the Invention

The present invention relates to an optical lighting apparatus and method, and more particularly, to an improved fixture including a hollow light guide that is remotely located from a source of light.

### Background of the Invention

Hollow light guides (also called light tubes or light diffusers) are known. The hollow light guide includes a light guide luminaire having a hollow section. The hollow light guide is typically fabricated from a prismatic material or other method. A light source is installed at one or both ends of the hollow light guide and the light source emits light into a hollow section of the hollow light guide luminaire. Sometimes a transition device is positioned between the hollow light guide and the source of light. The disadvantage with such arrangements is that because the light source or engine is physically installed at one end of the luminaire, a catwalk or ladder is required to perform maintenance on the hollow light guide because the luminaire and the light source are usually installed overhead. Another disadvantage is that heat generated by the light source is dissipated into the luminaire. Another disadvantage is the weight of the light source needs to be suspended along with the luminaire. Yet another disadvantage is that electrical wiring needs to be run overhead to the suspended light source. Still another disadvantage is that the light source is subject to shock and vibration when hung from the ceiling.

### Summary of the Invention

It is, therefore, an object of the present invention to provide a lighting system in having a light source that is remotely located from a hollow light guide.

It is another object of the present invention to provide a lighter weight lighting system for overhead installation.

It is yet another object of the present invention to provide a hollow light guide that is cool over its entire length.

It is a further object of the present invention to provide a light system that does not require electrical wiring to be run overhead thereby eliminating radio frequency interference (RFI) and electromagnetic interference (EMI) caused by overhead electrical wiring.

It is yet a further object of the present invention to minimize the risk of electrical shock when replacing light bulbs.

It is yet a further object of the present invention to provide a lighting system that is easier to maintain.

These and other objects of the present invention are achieved by providing a lighting system in which the source of light is remotely located from a hollow light guide. Instead, the source of light emits light into an optical fiber which can then be focused into the hollow light guide by a lens or other light directing element such as a light transformer. Advantageously, the arrangement according to the present results in a lighter weight overhead installation, allows the hollow light guide to remain cool over its entire length, eliminates any electrical hazard overhead, eliminates RFI and EMI caused by overhead electrical wiring, and provides for easier maintenance from the floor level.

The foregoing objects are also achieved by a lighting system including a light source. At least one optical fiber having one end thereof is located adjacent the light source. A light directing element is located adjacent an opposite end of the at least one optical fiber. A hollow light guide is coupled to the light directing element for emitting light generated by the light source.

The foregoing objects are also achieved by a light system including a light source. At least one optical fiber having one end thereof is located adjacent the light source, the at least one optical fiber having a cross-section. A hollow light guide is coupled to an opposite end of the at least one optical fiber the hollow light guide having substantially the same cross-section as the optical fiber.

Still other objects and advantages of the present invention will become readily apparent to those skilled in the art from the following detailed description, wherein the preferred embodiments of the invention are shown and described, simply by way of illustration of the best mode contemplated of carrying out the invention. As will be realized, the invention is capable of other and different embodiments, and its several details are capable of modifications in various respects, all without departing from the invention. Accordingly, the drawings and description thereof are to be regarded as illustrative in nature, and not as restrictive.

### Brief Description of the Drawings

The present invention is illustrated by way of example, and not by limitation, in the figures of the accompanying drawings, wherein elements having the same reference numeral designations represent like elements throughout and wherein:
Figure 1 is an illustration of a lighting assembly according to a first embodiment of the present invention.
Figure 2 is a cross-sectional view of the hollow light guide taken along lines 2-2 of Figure 1;
Figure 3 is an illustration of a lighting assembly according to a first embodiment of the present invention; and
Figure 4 is an illustration of a lighting assembly according to a first embodiment of the present invention.

### Best Mode for Carrying Out the Invention

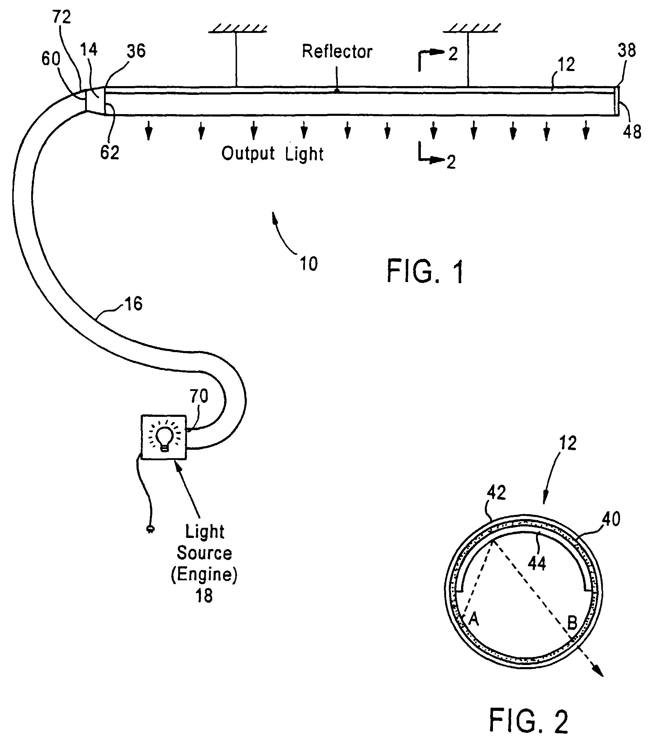

Referring first to Figure 1, there is depicted a light system, generally indicated at 10, which is constructed in accordance with the principles of the present invention. For convenience, the invention will be described in relation to the orientations depicted in Figures 1-4 and consequently, terms such as "above", "below", "left" and "right" as used herein are to be construed by the relative sense.

As depicted in Figure 1, there is a lighting system 10 which includes an elongated hollow light guide assembly 12, a light directing element 14, such as a lens or a light transformer, an optical fiber 16 and a light source or engine 18. The color of the light emitted from the light source 18 can be controlled by using interchangeable filters to emit any desired color such as a red or green light. The elongated hollow light guide assembly 12, as depicted in Figure 1, is mounted overhead such as being suspended from a ceiling or the like. The light directing element 14 is mounted directly to the hollow light guide assembly 12 and is also suspended overhead. The light source 18 is remotely located from the hollow light guide 12 and is not suspended from overhead. The optical fiber 16 couples the light source 18 to the light directing element 14. Advantageously, the arrangement of the present invention permits the source of light to be remotely located from the hollow light guide 12 thus eliminating electrical wiring overhead which generates EMI and RFI, and simplifies maintenance.

The elongated hollow light guide assembly 12 has a first end 36 and a second end 38. As depicted in Figure 2, a prismatic cylinder 40 is formed with a translucent or transparent cylinder 42 concentrically surrounding the prismatic cylinder 40. An internal reflector or diffusing medium 44 having a semi-cylindrical cross-section is positioned within prismatic cylinder 40 and can be co-extensive therewith. Referring back to Figure 1, a reflector 48 can be placed at the second end 38 for reflecting light back into the hollow light guide 12. The reflector 48 can be flat or concave and can be a mirror. The reflector 48 is arranged at the end of the prismatic cylinder 40 at the end farthest from the light source 18 so as to reflect light back into the prismatic cylinder 40.

Many different prior art hollow light guides may be used in the present invention. For example, those depicted in Figures 1 and 2 of U.S. Patent No. 5,339,382, which are described in U.S. Patent Nos. 4,615,579; 4,750,798; and 4,797,708 can be used. Materials other than prismatic materials may be used in the present invention.

The cylinder 42 should be generally rigid, although the cylinder 42 can also be somewhat flexible. It is essential that the material be transparent, and preferably homogeneous and isotropic, such as, for example, polymeric materials or glass. Useful polymeric materials for this purpose are commercially available, for example, acrylic and polycarbonates. The particular material selected is not significant to the invention hereof, as long as it provides the described function. Acrylics and polycarbonates are of particular interest because of their high indices of refraction physical properties, i.e., weatherability, ultraviolet resistance, dimensional stability and temperature tolerance among other properties.

The prismatic cylinder 40 is a tubular light conduit formed of a transparent polymeric material. The prismatic or polymeric material is a thin, flexible, clear transparent material, such as acrylic or polycarbonate polymer, with a smooth surface on the outside and prismatic grooves on the inside, which form an inner surface of inner tube tiny optical prisms that extend longitudinally along the hollow light guide. When light strikes the inner surface of the prismatic cylinder 40, within an acceptable angular range, the light passes through the wall. As depicted in Figure 2, a light ray has been reflected into the inner diameter surface at point A at an angle in which the light is totally internally reflected back into internal reflector 44. The reflected light reflects off of internal reflector 44 and passes through a portion of prismatic material 40, through opaque cylinder 42. The diffusing medium 44, which may be a dull white colored strip or coating to enable diffusion or scattering of light impinging thereon, can extend along the length of the prismatic material 40 as depicted in Figures 1 and 2. The diffusing medium 44 is substantially opposite the light-transmissive portion of the prismatic cylinder 40. The hollow light guide 12 may be a form of the light-transmissive material having gaps formed therein or may be the type of light-transmissive material which allows light to go through if the light strikes the material at a particular angle.

The prismatic cylinder 40 may be produced in many different ways which are well known to those skilled in the art, for example, as disclosed and illustrated in U.S. Patent No. 4,805,984, the disclosure of which is hereby incorporated in its entirety by reference into the present application. The particular manufacturing process is not essential to the present invention, and it is a matter of choice based upon manufacturing costs and availability. However, a thin, flexible film may be utilized, for example, a right angle transmissive film TRAFII, available from 3-M, which permits light to pass therethrough above a critical angle. Other films are disclosed in U.S. Patent Nos. 4,805,984, 5,339,382 and 5,363,470, the disclosures of which are hereby incorporated by reference in their entirety into the present application. Such a film may be rolled into a tubular configuration and seam fastened by welding, or for particular applications, it may be acceptable to simply overlap or join the edges. In addition, it should be appreciated that the cylinder 40 may be extruded or molded to provide a flexible or rigid unitary member.

The light directing element 14 has a small diameter end 60 and a large diameter end 62. Large diameter 62 is coupled to the first end 36 of the hollow light guide 12 and has an outer periphery matching that of the hollow light guide 12. Although the hollow light guide is depicted in Figure 2 as being cylindrical, other shapes such as square, rectangular or elliptical and the like can be used, and the light directing element would be shaped accordingly. An exemplary light directing element is disclosed in the U.S. Patent No. 4,898,450, the entire disclosure of which is incorporated by reference in its entirety into the present application. Other forms of transitions are available.

Light is focused by the light directing element 14 to initially be directed parallel to the prismatic material and be reflected upon reaching the end of the hollow light guide 12, which is furthest from the light source, the light ray is reflected by reflector or mirror 48 back into the light guide 12. The film is formed to reflect the light and to minimize absorption.

Optical fiber 16 may be rigid or flexible. In the present invention, the optical fiber 16 is preferably flexible so that the hollow light guide 12 can be remotely located from the light source 18. In the preferred embodiment, the optical fiber 16 has a circular cross-section, although other cross-sections may be used. The light propagates through the optical fiber. The light is radiated from the hollow light guide 12 out of the lower circumferential surface in the direction of the arrows shown in Figure 1. Thus, light radiates out from the hollow light guide 12 in an arc of approximately 180 degrees. For other applications, other radiation patterns can be selected up to 360 degrees. The optical fiber, although depicted as circular in cross-section may have a suitable cross-section which matches the light directing element or the hollow light guide. In addition, a cladding layer is formed over the outer diameter of the optical fiber so that the light propagating through the optical fiber 16 is totally internally reflected therein and propagates from an input end to an output end with minimal radiation out of the circumferential surface of the fiber. The optical fiber 16 has a solid core light guide which is surrounded by a cladding layer and a sheath or a shielding layer. Optical fiber 16 can also be an optical fiber bundle or a hollow light guide. The core is the portion of the light guide which transmits light. The cladding layer typically comprises polytetrafluoroethylene (PTFE or Teflon®) or the like, while the outer sheath is fabricated of a material such as polyvinylchloride (PVC). The optical fiber 16 has a first end 70 directly in contact with the light source 18 and a second end 72 of the optical fiber 16 is matched with and directly in contact with the smaller diameter end 60 of the light directing element 14.

Although not essential to the present invention, light will be totally internally reflected by the prismatic material if the light strikes the prismatic material less than a certain predetermined angle. If the light strikes the material at above a certain predetermined angle, the light may either be partially internally reflected or pass through the prismatic material and be emitted from the hollow light guide 12.

Light rays propagated along the prismatic material occasionally strike reflector 48, causing a random change in the direction of the propagation of such rays; usually into a direction which the hollow light guide is unable to confine by total internal reflection, thus allowing such rays to escape from light guide assembly 12. For example, a light ray originating at point A is reflected by reflector 48 and strikes the hollow light guide 12 at an angle which results in further reflection of the ray such that the ray strikes diffusing material 44 and is reflected to point B where it exits trough the hollow light guide 12.

The light source 18 is connected to source of electrical power. The light source 18 can include a radiation source such as an arc lamp, incandescent bulb, lens bulb, an LED or fluorescent tube or the like, and can also include a collector which collects the light emitted by the radiation source and uniformly focuses the light into the optical fiber 16. The light propagates through the optical fiber 16 into the light directing element 14.

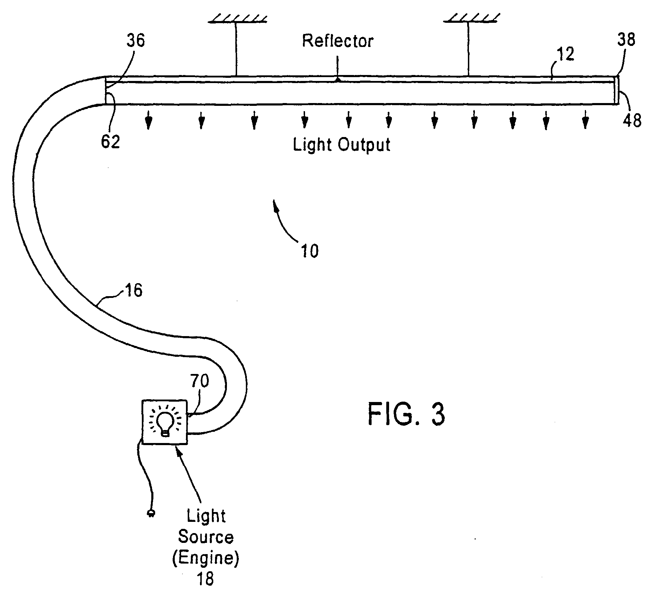

A second embodiment of the present invention is depicted in Figure 3. The only difference between the embodiment of Figure 3 and the embodiment of Figures 1 and 2 is that there is no light directing element 14 and instead the second end 62 of the optical fiber 16 is matched to have the same shape and periphery of the first end 36 of the hollow light guide 12. The remaining reference numbers need not be discussed as the description of these reference numbers are the same as the first embodiment.

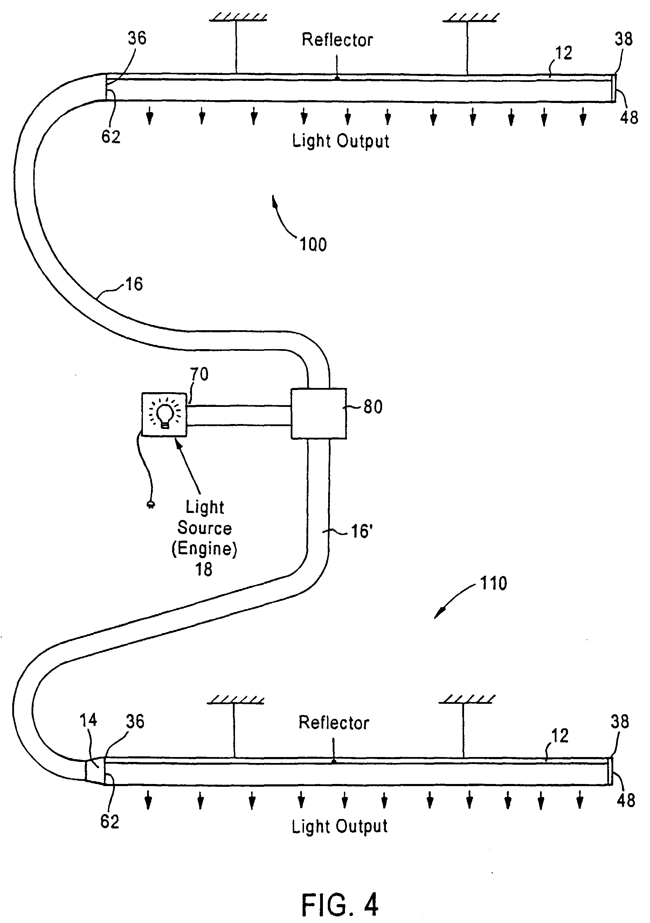

A third embodiment of the present invention is depicted in Figure 4. The third embodiment combines features of the first and second embodiments. Specifically, a conventional splitter 80 splits the light emitted by the light source 18 into two optical fibers 16, 16'. Optical fiber 16 is part of a lighting assembly 100 which is the lighting assembly described above for Figure 3. Optical fiber 16' is part of a lighting assembly 110 which is the light assembly described above for Figures 1-2. Although two lighting assemblies 100, 110 are shown and described, it should be appreciated that any number of lighting assemblies can be used in this embodiment. Additionally, other splitters can be used to further split the light generated by the light source 18 to add more hollow light guides 12.

It should be appreciated that a lighting assembly has been described that is advantageously lighter weight, is cool over the entire length of the hollow light guide, eliminates any electrical hazard overhead, eliminates RFI or EMI caused by exposed overhead electrical wiring, is easier to install with less bracketry, is easier to maintain from floor level, and can use a single lower cost light source to service one or more hollow light guides.

It will be readily seen by one of ordinary skill in the art that the present invention fulfills all of the objects set forth above. After reading the foregoing specification, one of ordinary skill will be able to affect various changes, substitutions of equivalents and various other aspects of the invention as broadly disclosed herein. It is therefore intended that the protection granted hereon be limited only by the definition contained in the appended claims and equivalents thereof.

## Claims

1. A lighting system, comprising:
a light source;
at least one optical fiber having one end thereof located adjacent said light source;
a light directing element located adjacent an opposite end of said at least one optical fiber; and
a hollow light guide coupled to said light directing element for emitting light generated by said light source.

2. The lighting system of claim 1, wherein said light source is remotely located from said hollow light guide.

3. The lighting system of claim 1, wherein said hollow light guide is suspended from a suspension system, and said light source is not suspended by the suspension system.

4. The lighting system of claim 1, wherein the light directing element focuses light emitted by said light source into parallel beams which enter said hollow light guide.

5. The lighting system of claim 1, wherein said light directing element is an expanded beam fiber to fiber connector.

6. The lighting system of claim 1, wherein at least one optical fiber has a smaller diameter than said hollow light guide.

7. The lighting system of claim 1, wherein said at least one optical fiber is directly connected to said light source.

8. The lighting system of claim 1, wherein said lighting source is one of a sulfur lamp, an incandescent lamp, a metal halide lamp, a light emitting diode and a fluorescent lamp.

9. The lighting system of claim 1, wherein the at least one optical fiber is a single optical fiber.

10. The light system of claim 1, wherein said at least one optical fiber is a bundle of optical fibers.

11. The lighting system of claim 1, wherein said light directing element is a lens.

12. The lighting system of claim 1, wherein the hollow light guide is a cylindrical prismatic material.

13. The lighting system of claim 1, wherein said hollow light guide is formed of a hollow cylinder of prismatic material surrounded by an opaque cylindrical member and having a reflective member mounted within said hollow light guide.

14. A lighting system, comprising:
a light source;
at least one optical fiber having one end thereof located adjacent said light source said at least one optical fiber having a diameter; and
a hollow light guide coupled to an opposite end of said at least one optical fiber said hollow light guide having a diameter;
wherein the diameters of said at least one optical fiber and said hollow light guide are substantially equal.

15. The lighting system of claim 14, wherein said light source is remotely located from said hollow light guide.

16. The lighting system of claim 14, wherein said hollow light guide is suspended from a suspension system, and said light source is not suspended by the suspension system.

17. The light system of claim 14, wherein said at least one optical fiber is directly connected to said light source.

18. The lighting system of claim 14, wherein said at least one optical fiber is a bundle of optical fibers.

19. The lighting system of claim 14, wherein the hollow light guide is a cylindrical prismatic material.

20. The lighting system of claim 14, wherein said hollow light guide is formed of a hollow cylinder of prismatic material surrounded by an opaque cylindrical member and having a reflective member mounted within said hollow light guide.
